Europäisches Patentamt

European Patent Office

Office européen des brevets

(11) Veröffentlichungsnummer: **0 098 491**
**B1**

(12) # EUROPÄISCHE PATENTSCHRIFT

(45) Veröffentlichungstag der Patentschrift:
26.07.89

(51) Int. Cl.⁴: **G 08 C 17/00**

(21) Anmeldenummer: **83106220.3**

(22) Anmeldetag: **25.06.83**

(54) **Fernmesseinrichtung.**

(30) Priorität: 08.07.82 DE 3225486

(43) Veröffentlichungstag der Anmeldung:
18.01.84 Patentblatt 84/3

(45) Bekanntmachung des Hinweises auf die Patenterteilung:
26.07.89 Patentblatt 89/30

(84) Benannte Vertragsstaaten:
AT BE CH DE FR GB IT LI LU NL SE

(56) Entgegenhaltungen:
EP-A- 0 029 560
DE-A- 2 909 129
DE-A- 2 935 271
FR-A- 2 428 826
US-A- 3 361 977
US-A- 3 754 250

(73) Patentinhaber: Asea Brown Boveri Aktiengesellschaft,
Kallstadter Strasse 1, D-6800 Mannheim-Käfertal (DE)

(72) Erfinder: Berthold, Rainer, Dipl.-Phys., Wielandstrasse 4,
D-6901 Gaiberg (DE)

(74) Vertreter: Rupprecht, Klaus, Dipl.-Ing. et al, c/o Asea
Brown Boveri Aktiengesellschaft Zentralbereich
Patente Postfach 100351, D-6800 Mannheim 1 (DE)

## Beschreibung

Die Erfindung bezieht sich auf eine Fernmeßeinrichtung gemäß dem Oberbegriff des Patentanspruches 1.

Aus der Zeitschrift «Messen + Prüfen/Automatik», September 1978, Seiten 539 bis 543 ist eine Meßeinrichtung zur drahtlosen Übertragung von Meßdaten nach dem Frequenzmodulations- oder Pulscodemodulationsverfahren beschrieben. Eine solche Einrichtung umfaßt eine oder mehrere Meßstationen und wenigstens eine Empfangsstation. Die Übertragung der Meßdaten von der Meßstation an die Empfangsstation erfolgt entweder kontinuierlich oder auf Abruf.

Alle Einrichtungen der genannten Art weisen als gemeinsames Merkmal auf, daß die Meßstationen einen Netzanschluß oder Batterien bzw. Akkumulatoren als Stromversorgung benötigen. Bewegliche Meßstationen sind auf Batterien bzw. Akkumulatoren angewiesen, wobei das Gewicht, der Raumbedarf, der zulässige Temperaturbereich und die Notwendigkeit des Austauschens der Primärbatterien bzw. des Ladens von Akkumulatoren als Nachteil anzusehen sind.

Zwar ist aus der EP-A-0 029 560 ein Verfahren zum Erkennen und/oder Zählen von Objekten von einer zentralen Abfragestelle aus bekannt geworden, die eine Abfragestation und ggf. mehrere Antwortgeräte aufweist, die über eine drahtlose Funkstrecke von einem im Abfragegerät befindlichen Energiesender mit Energie versorgt werden. Die von dem Abfragegerät abgefragten Informationen sind innerhalb des Antwortgerätes schon von vornherein gespeichert; die Energieversorgung muß daher lediglich die innerhalb des Antwortgerätes vorhandenen Komponenten mit Spannung versorgen, nicht aber praktisch außerhalb des Antwortgerätes befindliche Meßeinrichtungen, wie beispielsweise Thermometer, Gassensoren oder Druckmesser.

Der Erfindung liegt ausgehend von dem eingangs genannten Stand der Technik die Aufgabe zugrunde, eine Fernmeßeinrichtung zu schaffen, die wenigstens eine Meßstation aufweist, für deren Betrieb auf den Anschluß an ein elektrisches Netz bzw. den Einbau einer elektrischen Energiequelle verzichtet werden kann.

Diese Aufgabe wird erfindungsgemäß durch die Merkmale des Patentanspruches 1 gelöst.

Die erfindungsgemäße Fernmeßeinrichtung kann mit einer oder mehreren Meßstationen ausgerüstet werden, die bezüglich ihrer elektrischen Energieversorgung passiv ausgebildet sind. Erfindungsgemäß erhalten die Meßstationen die für ihren Betrieb erforderliche Energie von einem Energiefeld, das von außen eingestrahlt wird. Es handelt sich hierbei vorzugsweise um ein Hoch- oder Höchstfrequenzenergiefeld. Die Meßstationen sind beweglich ausgebildet und können an jedem Ort aufgestellt werden. Selbst an unzugänglichen Plätzen lassen sich die Meßstationen anordnen, da sie wartungsfrei sind und unabhängig von Batterien oder Akkumulatoren betrieben werden, die von Zeit zu Zeit aufgeladen bzw. ausgetauscht werden müssen. Die Meßstationen sind wesentlich leichter und kleiner ausgebildet als Meßstationen bekannter Fernmeßeinrichtungen, da sie mit keiner Energiequelle ausgerüstet sind, die bezüglich ihres Gewichtes oder ihres Platzbedarfes zu berücksichtigen ist.

Die erfindungsgemäßen Meßstationen arbeiten nur, wenn ihnen von außen Energie zugeführt wird. Hierdurch ist eine gezielte Abfrage der Meßstationen möglich und ungewünschte Signalaussendungen einer Meßstation ausgeschlossen. Bei Bedarf kann an alle Meßstationen gleichzeitig Energie übermittelt werden. Die Abfrage der Meßwerte kann auch hier im Multiplexbetrieb erfolgen. Die der erfindungsgemäßen Fernmeßeinrichtung zugeordneten Meßstationen sind alle gleich ausgebildet. Das selbe gilt für die zugehörige bzw. die zugehörigen Abfragestation(en).

Erfindungsgemäß weist jede Meßstation eine Antenneneinheit auf, in welcher der Energieempfänger für die Meßstation enthalten ist. Der Antenneneinheit ist ein Gleichrichter nachgeschaltet, der aus der eingestrahlten Energie einen Gleichstrom bzw. eine Gleichspannung für die Versorgung aller Bauelemente der Meßstation erzeugt. Die Meßstation ist mit einer Signalempfangseinheit ausgerüstet, die durch einen Hochfrequenzempfänger für den Empfang von Informationssignalen und einen Digitalempfänger sowie einen Serien/Parallelwandler gebildet wird. Die Signalempfangseinheit ist an einen Mikrocomputer angeschlossen. Letzter steuert außerdem den Funktionsablauf der Meßstation sowie den Antennenmodulator für das Rücksendesignal.

Die Meßeinrichtung der Meßstation setzt sich aus einem Meßfühler, einem Meßwandler und einem Analog/Digital-Wandler zusammen. Der Meßfühler kann als Temperaturfühler, als Gassensor, als Belichtungsmesser oder als Sensor für eine andere physikalische Größe ausgebildet sein. Der Mikrocomputer bildet aus den Meßwerten ein Informationssignal und schickt dieses mit Hilfe eines Modulators über eine Antenneneinheit zur Abfragestation. Bei dem von der Meßstation abgestrahlten Signal handelt es sich um ein moduliert reflektiertes Signal. Für die Reflexion des Informationssignals verändert der Modulator entsprechend dem ihm zugeführten Informationssignal den Widerstand der nachgeschalteten Antenneneinheit und damit deren Reflexionsgrad für einen von einer Abfragestation kommenden Energiestrahl.

Aus der US-A-3 361 977 ist eine Einrichtung bekannt geworden, bei der Signale und Energie drahtlos an ein Empfangsgerät übermittelt werden; das Empfangsgerät ist aber kein Antwortgerät, welches Meßergebnisse an das Sendegerät übermittelt.

Die FR-A-2 428 826 beschreibt eine drahtlose Meßeinrichtung, bei er in einem Rotor erzeugte Signale drahtlos an einen Stator übermittelt werden. Die Energieübertragung erfolgt hier zwar auch drahtlos; es handelt sich aber hier um die Ankopplung zweier Transformatoren, so daß die Energieübertragung keine Energieübertragung im Sinne der Erfindung darstellt.

Die DE-A-2 935 271 beschreibt einen Temperaturfühler, der der Temperatur entsprechende Signale an eine Empfangseinrichtung übermittelt. Dabei wird von einem Sender eine Frequenzreihe abgegeben und detektiert, ob die im Temperaturfühler untergebrachten Bauelemente in einer bestimmten, von der Temperatur abhängigen Resonanzbereich schwingen. Eine Meßeinrichtung im Sinne der Erfindung ist hier nicht beschrieben.

Die von der (bzw. den) Meßstation(en) ermittelten Meßdaten können von einer hierfür vorgesehenen Abfragestation, die ebenfalls zu der Fernmeßeinrichtung gehört, abgefragt werden. Erfindungsgemäß ist die Abfragestation mit einem Energiesender ausgerüstet, mit dessen Hilfe die ohne eigene Energiequellen ausgebildeten Meßstationen mit elektrischer Energie versorgt werden. Ferner ist in jeder Abfragestation ein Informationssender vorgesehen, mit dem Information an eine oder mehrere Meßstationen übermittelt werden kann. Als Energiesender wird hierbei ein Energieoszillator verwendet. Die von der Abfragestation an die Meßstation übermittelte Information wird mit Hilfe eines Informationsoszillators erzeugt und ausgesendet. Der Energieoszillator und der Informationsoszillator sind über einen Oszillatorkoppler und eine Empfangssignalabkopplung an die Antenne der Abfragestation angeschlossen.

Die von der Meßstation an die Abfragestation übermittelten Meßdaten werden von der Antenne der Abfragestation empfangen und über die Empfangssignalabkopplung einem Hochfrequenzempfänger für Informationssignale zugeführt. Diesem Hochfrequenzempfänger ist ein Digitalempfänger nachgeschaltet. Der Ausgang desselben ist über einen Serien/Parallel-Wandler an die Signalverarbeitungs- und Steuereinheit der Abfragestation angeschlossen. Diese wird beispielsweise durch einen Mikrocomputer gebildet. Ein erster Ausgang des Mikrocomputers steht mit einer Oszillatorsteuerung in Verbindung, die dem Energieoszillator vorgeschaltet ist. Der zweite Ausgang des Mikrocomputers ist über einen Parallel/Serien-Wandler an einen Modulator angeschlossen, der dem Eingang des Informationsoszillators vorgeschaltet ist. Ein dritter Ausgang des Mikrocomputers ist an eine Anzeigevorrichtung angeschlossen, während der vierte Ausgang des Mikrocomputers an den Regler einer Regelstrecke anschließbar ist. Ein Speicher zur Aufnahme von Informationsdaten ist so mit dem Mikrocomputer verbunden, daß dieser ständig Zugriff zu diesen Informationsdaten hat.

Um mehrere gleichzeitig vorhandene Meßstationen nacheinander abfragen zu können, besteht die Möglichkeit, die Abfragestation zusätzlich mit einem Öffnungscodespeicher und einem Öffnungscodesender auszurüsten, während die Meßstation hierfür mit einem Öffnungscodespeicher, einem Öffnungscodeempfänger und einem Öffnungscodevergleicher ausgerüstet wird. Eine so ausgebildete Meßstation sendet nur dann ihre Meßdaten an die Abfragestation, wenn der von der Abfragestation zu Beginn des Abfragezyklus ausgesendete Öffnungscode identisch mit dem in der Meßstation gespeicherten Öffnungscode ist, was innerhalb des Öffnungscodevergleichers festgestellt wird, der nach dem Feststellen gleicher Codes ein entsprechendes Signal an die Steuereinheit der Meßstation weitergibt.

Die erfindungsgemäße Fernmeßeinrichtung kann beispielsweise bei der Speisezubereitung Verwendung finden, um die Temperaturzustände in Garbehältnissen festzustellen. Hierfür wird beispielsweise eine Meßstation im Verschlußbereich des Garbehältnisses angeordnet und eine Abfragestation über dem Garbehältnis installiert. Die Meßeinrichtung ist ebenfalls dafür geeignet, die Temperatur und den Druck von Autoreifen zu ermitteln, indem an oder in jedem Reifen eine solche Meßstation befestigt und am Fahrzeuggestell eine Abfragestation installiert wird.

Die Erfindung wird nachfolgend anhand von Zeichnungen erläutert.

Es zeigen:

Figur 1: Die schematische Darstellung einer Fernmeßeinrichtung

Figur 2: eine der erfindungsgemäßen Fernmeßeinrichtung zugeordnete Abfragestation,

Figur 3: eine der Fernmeßeinrichtung zugeordnete Meßstation,

Figur 4: eine in einer Speisezubereitungseinrichtung angeordnete Fernmeßeinrichtung.

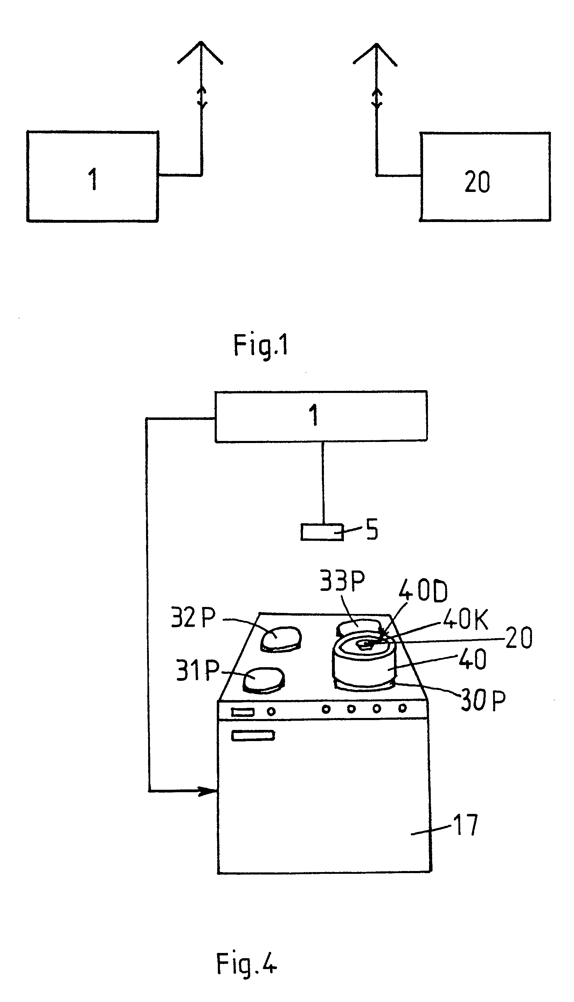

Figur 1 zeigt die schematische Darstellung einer Fernmeßeinrichtung, die mit einer Abfragestation 1 und einer Meßstation 20 ausgerüstet ist. Die Verbindung zwischen der Abfragestation 1 und der Meßstation 20 erfolgt drahtlos. Die Abfragestation 1 strahlt Energie und Information an die Meßstation 20 ab und empfängt von dort wieder Information.

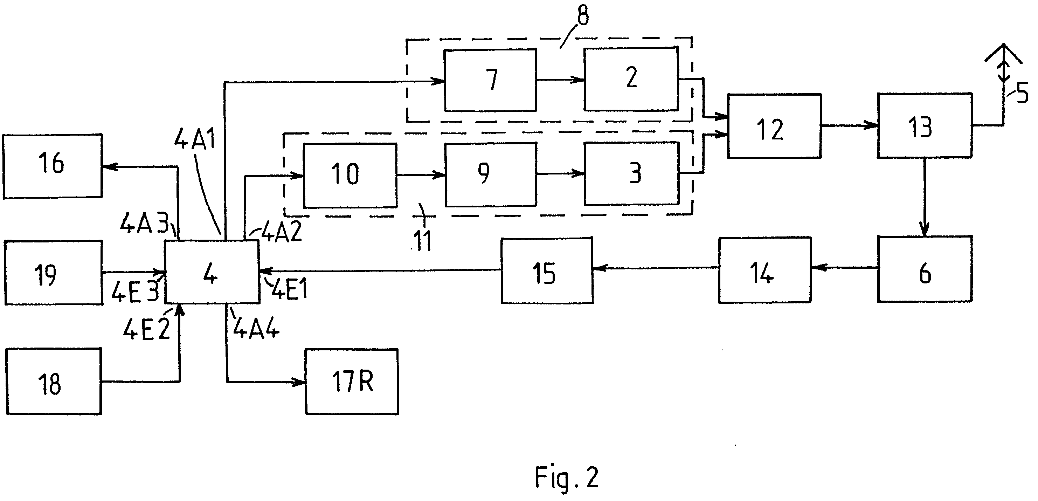

Figur 2 zeigt das Blockschaltild einer Abfragestation 1, mit der die erfindungsgemäße Fernmeßeinrichtung ausgerüstet ist. Die Abfragestation wird im wesentlichen durch einen Energiesender 2, einen Informationssender 3, eine Steuereinheit 4, eine Antenne 5 und einen Empfänger 6 gebildet. Bei dem hier dargestellten Ausführungsbeispiel wird der Energiesender 2 durch einen Energieoszillator gebildet. Vor den Eingang des Energieoszillators ist eine Oszillatorsteuerung 7 geschaltet. Der Energieoszillator 2 und die Oszillatorsteuerung 7 bilden den Energiekanal 8. Als Informationssender 3 wird bei dem hier dargestellten Ausführungsbeispiel ein Informationsoszillator verwendet. Dem Eingang des Informationsoszillators ist ein Modulator 9 vorgeschaltet, dessen Eingang mit einem Parallel/Serien-Wandler 10 verbunden ist. Die miteinander verbundenen Funktionsblöcke 3, 9 und 10 bilden den sogenannten Informationskanal 11. Der Ausgang des Energieoszillators 2 und der Ausgang des Informationsoszillators 3 sind über einen Oszillatorkoppler 12 und eine Empfangssignalabkopplung 13 an die Antenne 5 der Abfragestation 1 angeschlossen. Die in Figur 2 dargestellte Abfragestation 1 weist für die Energie und Informationsaussendung an die Meßstation(en) 20 sowie für den Empfang von Meßdaten nur eine einzige Antenne 5 auf. Es besteht selbstverständlich die Möglichkeit, die Abfragestation auch mit zwei oder drei Antennen auszurüsten, so daß sowohl der Energieoszillator 2 als auch der Informationsoszillator 3 und der Empfänger 6 jeweils eine eigene Antenne besitzen. Der in die Abfragestation eingebaute Energieoszillator arbeitet im Mikrowellenbereich. Das gleiche gilt für den Informationsoszillator 3. Der Energieoszillator sendet mit einer hohen, jedoch völlig ungefährlichen Leistung auf der Energiefrequenz $f_E$ eine unmodulierte Energiestrahlung aus. Der Informationsoszillator 3 strahlt mit erheblich geringerer Leistung auf einer der Energiefrequenz $f_E$ benachbarten Signalfrequenz $f_I$ ein Signal ab, dem eine Information aufmoduliert ist. Die Antenne 5 strahlt beide Signale in Richtung der angesprochenen Meßstation 20 (hier nicht dargestellt) ab. Die von dieser Meßstation 20 ausgesendeten Meßdaten werden von der Antenne 5 empfangen und mit Hilfe der Empfangssignalabkopplung 13 dem Empfänger 6 zugeleitet. Von der angesprochenen Meßstation 20 (hier nicht dargestellt) werden die an die Abfragestation 1 zu übermittelnden Meßdaten ebenfalls im Hochfrequenzbereich, insbesondere im Mikrowellenbereich übermittelt. Der Empfänger 6 ist deshalb bei der hier dargestellten Abfragestation als Hochfrequenzempfänger ausgebildet. Sein Ausgang ist an einen Digitalempfänger 14 angeschlossen, der über einen Serien/Parallel-Wandler 15 mit der Steuereinheit 4 in Verbindung steht. Die Steuereinheit 4 wird bei dem hier dargestellten Ausführungsbeispiel durch einen Mikrocomputer gebildet. Ein erster Ausgang 4A1 des Mikrocomputers 4 ist an den Energiekanal 8, insbesondere an den Eingag der Oszillatorsteuerung 7 angeschlossen. Ein zweiter Ausgang 4A2 des Mikrocomputers steht mit dem Informationskanal 11, insbesondere dem Eingang des Parallel/Serien-Wandlers 10 in Verbindung. Ein dritter Ausgang 4A3 ist an eine Anzeigevorrichtung 16 angeschlossen. Bei Bedarf kann der Mikrocomputer 4 als Teil einer Regeleinrichtung verwendet werden, indem sein Ausgang 4A4 an den Regler 17R einer Regelstrecke angeschlossen wird. Ein zweiter Eingang 4E2 des Mikrocomputers ist an einen Speicher 18 angeschlossen. In ihm können Informationsdaten, insbesondere die Sollwerte einer Regelgröße gespeichert werden. Der Mikrocomputer ist so mit dem Speicher 18 verbunden, daß er ständig Zugriff zu den gespeicherten Informationsdaten nehmen kann. Ein dritter Eingang 4E3 des Mikrocomputers steht mit einem Zeitprogrammschalter 19 in Verbindung.

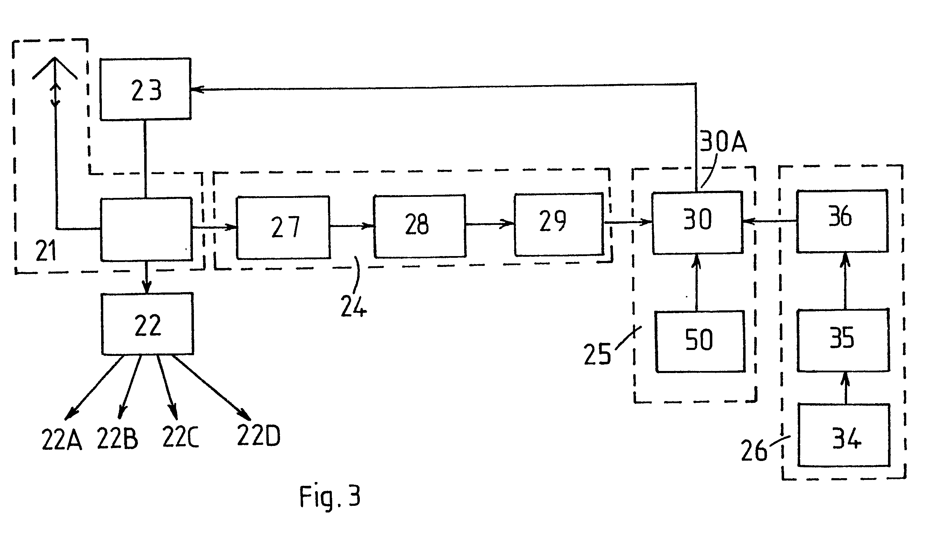

Figur 3 zeigt das Blockschaltbild einer Meßstation 20, mit der die erfindungsgemäße Fernmeßeinrichtung ausgerüstet ist. Die Meßstation 20 umfaßt im wesentlichen eine Antenneneinheit 21, einen Gleichrichter 22, einen Modulator 23, eine Signalempfangseinheit 24, eine Signalverarbeitungs- und Steuereinheit 25 sowie eine Meßvorrichtung 26. Die Antenneneinheit 21 besteht aus mindestens einer Streifenleiterantenne, die dem Strahlungsfeld Energie entnimmt. Ihr ist der Gleichrichter 22 nachgeschaltet. Mit seiner Hilfe wird aus der empfangenen Energie ein Gleichstrom bzw. eine Gleichspannung zur Versorgung der gesamten Meßstation 20 erzeugt. An die Ausgänge 22A, 22B, 22C und 22D sind die Signalempfangseinheit 24, die Signalverarbeitungs- und Steuereinheit 25, die Meßeinrichtung 26, und der Modulator 23 angeschlossen.

Die Antenneneinheit 21 steht weiterhin mit der Signalempfangseinheit 24 in Verbindung. Diese wird im wesentlichen durch einen Informationsempfänger 27, einen Digitalempfänger 28 und einen Serien/Parallel-Wandler 29 gebildet. Die Informationsübertragung von der Abfragestation 1 (hier nicht dargestellt) an die Meßstation 20 erfolgt im Hochfrequenz-, insbesondere Mikrowellenbereich. Der Informationsempfänger 27 ist deshalb als Hochfrequenzempfänger ausgebildet. Sein Ausgang ist über den Digitalempfänger 28 und den Serien/Parallel-Wandler 29 an einen Mikrocomputer 30 angeschlossen, der zur Signalverarbeitungs- und Steuereinheit 25 der Meßstation 20 gehört. Ein zweiter Eingang des Mikrocomputers 30 steht mit der Meßeinrichtung 26 in Verbindung. Sie wird durch einen Meßfühler 34, einen Meßwandler 35 und einen Analog/Digital-Wandler 36 gebildet. Der Ausgang des Meßfühlers 34 ist mit dem Meßwandler 35 verbunden, dessen Ausgang über den Analog/Digital-Wandler 36 mit dem Eingang des Mikrocomputers 30 verbunden ist.

Die vom Mikrocomputer 30 aufbereiteten Meßdaten gelangen über seinen Ausgang 30A in Form eines Steuersignals zum Modulator 23, der dem Mikrocomputer 23 nachgeschaltet ist, und welcher mit der Antenneneinheit 21 in Verbindung steht. Der Modulator 23 verändert entsprechend dem ihm zugeführten Signal den Widerstand der Antenneneinheit 21. Für einen von der Abfragestation 1 (hier nicht dargestellt) kommenden Energiestrahl ändert sich dadurch der Reflexionsgrad, d.h. die von der Meßstation 20 ermittelten Meßdaten prägen sich der Trägerfrequenz der reflektierenden Energiestrahlung als Modulation auf. Bei dem von der Meßstation abgestrahlten Informationssignal handelt es sich also um ein moduliert reflektiertes Signal. Ein dritter Eingang des Mikrocomputers 30 ist an einen Speicher 50 angeschlossen, der zusammen mit dem Mikrocomputer 30 die Signalverarbeitungs- und Steuereinheit 25 bildet.

Die Wirkungsweise der Fernmeßeinrichtung wird anhand eines Ausführungsbeispiels näher erläutert.

Figur 4 zeigt eine Einrichtung für die Zubereitung von Speisen. Die Einrichtung ist mit mindestens einer als Elektroherd ausgebildeten Energiequelle 17 ausgerüstet. Die Energiequelle 17 ist mit vier Heizplatten 30P, 31P, 32P und 33P versehen. Auf der Heizplatte 30P ist ein Garbehältnis 40 angeordnet, das die zu garende Speise enthält. Den Verschluß des Garbehältnisses 40 bildet ein Deckel 40D. Im Knopf 40K des Deckels 40D ist die Meßstation 20 der erfindungsgemäßen Fernmeßeinrichtung angeordnet. Die Abfragestation ist in definiertem Abstand über der Energiequelle 17 installiert.

Die Antenne 5 der Abfragestation 1 ist entweder zusammen mit der Abfragestation 1 in einer Dunstabzugshaube (hier nicht dargestellt) untergebracht oder ragt in den zwischen dem Garbehältnis 40 und der Abfragestation 1 verbleibenden freien Raum. Die im Knopf 40K eingebaute Meßstation 20 weist einen Meßfühler 34 auf, der die Temperatur der Innenfläche des Deckels 40D ermittelt. Die erfindungsgemäße Fernmeßeinrichtung kann so ausgebildet sein, daß die Abfragestation die von dem Meßfühler 34 ermittelte Temperatur während des gesamten Garprozesses kontinuierlich abfragt. Es besteht andererseits auch die Möglichkeit die Fernmeßeinrichtung erst zu einem bestimmten Zeitpunkt einzuschalten. Hierfür ist in der Abfragestation 1 ein Zeitprogrammschalter 19 vorgesehen, der mit dem Eingang 4E3 des Mikrocomputers 4 verbunden ist. Mit Hilfe dieses Zeitprogrammschalters 19 ist es möglich den Mikrocomputer 4 zu einer bestimmten Zeit zu aktivieren und nach dem Ablauf einer bestimmten Zeit wieder auszuschalten. Es besteht auch die Möglichkeit mit Hilfe des Zeitprogrammschalters 19 den Mikrocomputer 4 während mehrerer eingestellter Zeitintervalle zu aktivieren. Sollen mehrere auf der Energiequelle 17 angeordnete Garbehältnisse 40 gleichzeitig ihre Temperaturwerte an eine Abfragestation 1 übermitteln, dann muß jede Meßstation 20 im Speicher 50 ihrer Signalverarbeitungs- und Steuereinheit 25 einen speziellen Öffnungscode (z.B. Fabrikationsnummer) enthalten. Die Abfrage der Information der jeweils angesprochenen Meßstation 20 erfolgt in diesem Fall mittels einer Abfragestation 1, die in ihrem Mikrocomputer einen Abfragealgorithmus gemäß der Patentanmeldung DE-C-2 946 942 abgespeichert hat.

## Patentansprüche

1. Fernmeßeinrichtung mit einer Abfragestation (1) und einer Meßstation (20), die wenigstens einen Informationssender (3, 21, 23) und einen Informationsempfänger (6, 27) sowie eine Antenneneinheit (5, 21) aufweisen, wobei die Meßstation zusätzlich mit einer Meßeinrichtung (26) ausgerüstet ist, dadurch gekennzeichnet, daß die Abfragestation (1) wenigstens eine Steuereinheit (4) aufweist, die mit wenigstens einem Energiesender (2) mit dem Informationssender (3) in Verbindung steht, daß zur Energieversorgung der Meßstation (20) wenigstens ein Energieempfänger (21) vorgesehen ist, der Energie von dem Energiesender (2) aufnimmt, daß eine Signalverarbeitungs- und Steuereinheit (25) an die Meßeinrichtung (26), an eine Signalempfangseinheit (24) und an einen Modulator (23) mit nachgeschalteter Antenneneinheit (21) angeschlossen ist, und daß die Signalverarbeitungs- und Steuereinheit (25) über den Modulator (23) den Widerstand und damit den Reflexionsgrad der Antenneneinheit (21) steuert, so daß die von dem Energiesender (2) abgestrahlte Energie von der Antenneneinheit (21) entsprechend den von der Meßeinrichtung (26) gemessenen Meßsignalen moduliert reflektiert wird.

2. Fernmeßeinrichtung nach Anspruch 1, dadurch gekennzeichnet, daß die Antenneneinheit (21) in der Meßstation (20) den Energieempfänger aufweist, und daß der Antenneneinheit (21) ein Gleichrichter (22) nachgeschaltet ist, der für die gesamte Strom- bzw. Spannungsversorgung der Meßstation (20) vorgesehen ist.

3. Fernmeßeinrichtung nach einem oder mehreren der vorigen Ansprüche, dadurch gekennzeichnet, daß die Signalverarbeitungs- und Steuereinheit (25) der Meßstation (20) durch einen Mikrocomputer (30) und einen Speicher (50) gebildet ist, und daß der Ausgang (30A) des Mikrocomputers (30) an den Modulator (23) angeschlossen ist.

4. Fernmeßeinrichtung nach einem oder mehreren der Ansprüche 1 bis 3, dadurch gekennzeichnet, daß die Meßeinrichtung (26) wenigstens einen Meßfühler (34) umfaßt, dem ein Meßwandler (35) nachgeschaltet ist, und daß die Meßeinrichtung (26) über einen Analog/Digital-Wandler (36) an den Mikrocomputer (30) angeschlossen ist.

5. Fernmeßeinrichtung nach einem der Ansprüche 1 bis 4, dadurch gekennzeichnet, daß die Signalempfangseinheit (24) der Meßstation (20) einen Hochfrequenzempfänger (27) umfaßt, dem ein Digitalempfänger (28) und ein Serien/Parallel-Wandler (29) nachgeschaltet ist.

6. Fernmeßeinrichtung nach einem der Ansprüche 1 bis 5, dadurch gekennzeichnet, daß in der Abfragestation (1) eine als Mikrocomputer (4) ausgebildete Steuereinheit vorgesehen ist, die über einen Parallel/Serien-Wandler (10) und einen Modulator (9) an den als Informationssender dienenden Informationsoszillator (3) angeschlossen ist, und daß die Steuereinheit (4) über eine Oszillatorsteuerung (7) mit dem als Energiesender (2) dienenden Energieoszillator in Verbindung steht.

7. Fernmeßeinrichtung nach einem der Ansprüche 1 bis 6, dadurch gekennzeichnet, daß die Steuereinheit (4) der Abfragestation an eine Anzeigevorrichtung (16), einen Speicher (18) und einen Zeitprogrammschalter (19) angeschlossen ist, und daß die Antenne (5) der Abfragestation (1) über eine Empfangssignalabkopplung (13), einen Hochfrequenzempfänger (6), einen Digitalempfänger (14) und einen Serien/Parallel-Wandler (15) an die Steuereinheit (4) angeschlossen ist.

8. Fernmeßeinrichtung nach einem der Ansprüche 1 bis 7, dadurch gekennzeichnet, daß der Energiesender (2) der Abfragestation (1) und der Energieempfänger (21) der Meßstation (20) in Mikrowellenbereich arbeiten.

9. Fernmeßeinrichtung nach einem der Ansprüche 1 bis 8, dadurch gekennzeichnet, daß die Meßstation (20) im Knopf (40K) des Deckels (40D) eines Garbehältnisses (40) installiert ist, welches auf der Heizplatte (30P) einer als Elektroherd ausgebildeten Energiequelle (17) angeordnet ist, daß die Abfragestation (1) in definiertem Abstand über der Energiequelle (17) installiert ist, und daß mittels der Steuereinheit (4) der Abfragestation (1) die Energiezufuhr für jede Heizplatte (30P, 31P, 32P, 33P) der Energiequelle (17) steuerbar ist.

10. Fernmeßeinrichtung nach einem der Ansprüche 1 bis 9, dadurch gekennzeichnet, daß jede Meßstation zusätzlich einen Speicher (50) aufweist, in dem wenigstens ein die Meßstation (20) identifizierender Öffnungscode gespeichert ist.

## Claims

1. Telemetering device with an enquiry station (1) and a measuring station (20), which has at least one information transmitter (3, 21, 23) and an information receiver (6, 27) as well as an antenna unit (5, 21), the measuring station being additionally equipped with a measuring device (26), characterized in that the enquiry station (1) has at least one control unit (4), which is in connection with at least one energy transmitter (2) with the information transmitter (3), in that, for the energy supply of the measuring station (20), at least one energy receiver (21) is provided, which takes energy from the energy transmitter (2), in that a signal processing and control unit (25) is connected to the measuring device (26), to a signal receiving unit (24) and to a modulator (23) with downstream antenna unit (21), and in that the signal processing and control unit (25) controls via the modulator (23) the resistance and thus the reflectance of the antenna unit (21), so that the energy emitted by the energy transmitter (2) is modulatedly reflected by the antenna unit (21) according to the measured signals measured by the measuring device (26).

2. Telemetering device according to Claim 1, characterized in that the antenna unit (21) has in the measuring station (20) the energy receiver, and in that a rectifier (22), which is provided for the entire current or voltage supply of the measuring station (20), is connected downstream of the antenna unit (21).

3. Telemetering device according to one or more of the preceeding claims, characterized in that the signal processing and control unit (25) of the measuring station (20) is formed by a microcomputer 30) and a memory (50), and in that the output (30A) of the microcomputer (30) is connected to the modulator (23).

4. Telemetering device according to one or more of Claims 1 to 3, characterized in that the measuring device (26) comprises at least one measuring sensor (34), downstream of which a measuring transducer (35) is connected, and in that the measuring device (26) is connected via an analog/digital converter (36) to the microcomputer (30).

5. Telemetering device according to one of Claims 1 to 4, characterized in that the signal receiving unit (24) of the measuring station (20) comprises a high frequency receiver (27), downstream of which a digital receiver (28) and a series/parallel converter (29) are connected.

6. Telemetering device according to one of Claims 1 to 5, characterized in that in the enquiry station (1) there is provided a control unit which is designed as a microcomputer (4), is connected via a parallel/series converter (10) and a modulator (9) to the information oscillator (3) serving as information transmitter, and in that the control unit (4) is in connection via an oscillator control (7) with the energy oscillator serving as energy transmitter (2).

7. Telemetering device according to one of Claims 1 to 6, characterized in that the control unit (4) of the enquiry station is connected to a display device (16), a memory (18) and a time program switch (19), and in that the antenna (5) of the enquiry station (1) is connected via a receiving signal decoupling (13), a high frequency receiver (6), a digital receiver (14) and a series/parallel converter (15) to the control unit (4).

8. Telemetering device according to one of Claims 1 to 7, characterized in that the energy transmitter (2) of the enquiry station (1) and the energy receiver (21) of the measuring station (20) operate in the microwave range.

9. Telemetering device according to one of Claims 1 to 8, characterized in that the measuring station (20) is installed in the knob (40K) of the lid (40D) of a braising receptacle (40), which is arranged on the hotplate (30P) of an energy source (17) designed as an electric cooker, in that the enquiry station (1) is installed at a defined distance above the energy source (17), and in that the energy supply for each hotplate (30P, 31P, 32P, 33P) of the energy source (17) can be controlled by means of the control unit (4).

10. Telemetering device according to one of Claims 1 to 9, characterized in that each measuring station has additionally a memory (50), in which at least one opening code identifying the measuring station (20) is stored.

## Revendications

1. Dispositif de télémesure comprenant un poste d'interrogation (1) et un poste de mesure (20) qui sont munis d'au moins un émetteur d'informations (3, 21, 23) et d'un récepteur d'informations (6, 27) ainsi que d'une unité d'antenne (5, 21), le poste de mesure étant équipé en plus d'un dispositif de mesure (26), caractérisé en ce que le poste d'interrogation (1) possède au moins une unité de commande (4) qui est en liaison par au moins un émetteur d'énergie (2) avec l'émetteur d'informations (3), que pour l'alimentation en énergie du poste de mesure (20) il est prévu au moins un récepteur d'énergie (21) qui reçoit l'énergie provenant de l'émetteur d'énergie (2), qu'une unité (25) de commande et de traitement de signaux est reliée au dispositif de mesure (26), à une unité (24) de réception de signaux et à un modulateur (23) suivi d'une unité d'antenne (21), et que l'unité (25) de commande et de traitement de signaux commande, par le modulateur (23), la résistance et ainsi le degré de réflexion de l'unité d'antenne (21), de sorte que l'énergie rayonnée par l'émetteur d'énergie (2) soit réfléchie par l'unité d'antenne (21) de façon modulée en fonction des signaux de mesure mesurés par le dispositif de mesure (26).

2. Dispositif de télémesure selon la revendication 1, caractérisé en ce que l'unité d'antenne (21) dans le poste de mesure (20) comprend le récepteur d'énergie et qu'à la suite de l'unité d'antenne (21) est monté un redresseur (22) qui assure la totalité de l'alimentation en courant et en tension du poste de mesure (20).

3. Dispositif de télémesure selon une ou plusieurs des revendications précédentes, caractérisé en ce que l'unité (25) de commande et de traitement de signaux du poste de mesure (20) est constituée par un micro-ordinateur (30) et une mémoire (50), et que la sortie (30A) du micro-ordinateur (30) est reliée au modulateur (23).

4. Dispositif de télémesure selon une ou plusieurs des revendications 1 à 3, caractérisé en ce que le dispositif de mesure (26) comprend au moins un capteur de mesure (34) à la suite duquel est monté un transformateur de mesure (35), et que le dispositif de mesure (26) est relié par un convertisseur analogique/numérique (36) au micro-ordinateur (30).

5. Dispositif de télémesure selon l'une des revendications 1 à 4, caractérisé en ce que l'unité (24) de réception de signaux du poste de mesure (20) comprend un récepteur haute fréquence (27) à la suite duquel sont montés un récepteur numérique (28) et un convertisseur série/parallèle (29).

6. Dispositif de télémesure selon l'une des revendications 1 à 5, caractérisé en ce que dans le poste d'interrogation (1) il est prévu une unité de commande réalisée comme micro-ordinateur (4), qui est connectée par un convertisseur parallèle/série (10) et un modulateur (9) à l'oscillateur d'information (3) servant d'émetteur d'informations, et que l'unité de commande (4) est reliée par une commande d'oscillateur (7) à l'oscillateur d'énergie servant d'émetteur d'énergie (2).

7. Dispositif de télémesure selon l'une des revendications 1 à 6, caractérisé en ce que l'unité de commande (4) du poste d'interrogation est connectée à un dispositif d'affichage (16), une mémoire (18) et un interrupteur (19) à minuterie, et que l'antenne (5) du poste d'interrogation (1) est connectée à l'unité de commande (4) par un découplage (13) de signal de réception, un récepteur haute fréquence (6), un récepteur numérique (14) et un convertisseur série/parallèle (15).

8. Dispositif de télémesure selon l'une des revendications 1 à 7, caractérisé en ce que l'émetteur d'énergie (2) du poste d'interrogation (1) et le récepteur d'énergie (21) du poste de mesure (20) travaillent dans la plage des micro-ondes.

9. Dispositif de télémesure selon l'une des revendications 1 à 8, caractérisé en ce que le poste de mesure (20) est monté dans le bouton (40K) du couvercle (40D) d'un récipient de cuisson (40) qui est placé sur la plaque chauffante (30P) d'une source d'énergie (17) réalisée comme cuisinière électrique, que le poste d'interrogation (1) est monté à une distance définie au-dessus de la source d'énergie (17), et que l'alimentation en énergie pour chaque plaque chauffante (30P, 31P, 32P, 33P) de la source d'énergie (17) peut être commandée au moyen de l'unité de commande (4) du poste d'interrogation (1).

10. Dispositif de télémesure selon l'une des revendications 1 à 9, caractérisé en ce que chaque poste de mesure comprend en plus une mémoire (50) dans laquelle est mémorisé au moins un code d'ouverture identifiant le poste de mesure (20).

Fig.1

Fig.4

Fig. 2

EP 0 098 491 B1

Fig. 3